# EUROPEAN PATENT SPECIFICATION

(11) **EP 1 150 405 B1**
(45) Date of publication and mention of the grant of the patent: **03.03.2010**
(21) Application number: 01107873.0
(22) Date of filing: 10.04.2001
(51) Int. Cl.: H02B 13/035

(54) **Vacuum insulated switch gear and production method thereof**
Vakuumisolierte Schaltanlage und zugehöriges Herstellungsverfahren
Installation de commutation sous vide et son procédé de fabrication

(30) Priority: 24.04.2000 JP 2000122164; 14.12.2000 JP 2000379609
(43) Date of publication of application: 31.10.2001
(73) Proprietor: MITSUBISHI DENKI KABUSHIKI KAISHA, Chiyoda-ku Tokyo 100-8310 (JP)
(72) Inventor: Miyamoto, Seiichi, Chiyoda-ku, Tokyo 100-8310 (JP); Maruyama, Toshimasa, Chiyoda-ku, Tokyo 100-8310 (JP); Sato, Toshifumi, Chiyoda-ku, Tokyo 100-8310 (JP); Itotani, Takayuki, Chiyoda-ku, Tokyo 100-8310 (JP); Kobayashi, Minoru, Chiyoda-ku, Tokyo 100-8310 (JP)
(74) Representative: HOFFMANN EITLE

(56) References cited:
- US-A- 3 956 721

## Description

### BACKGROUND OF THE INVENTION

### Field of the Invention

This invention relates to a vacuum insulated switch gear, particularly a vacuum insulated switch gear having an electric conductive coating formed by a thermal spraying process on an outer surface of a molded insulator covering a vacuum container, and a production method thereof.

### Description of the Related Art

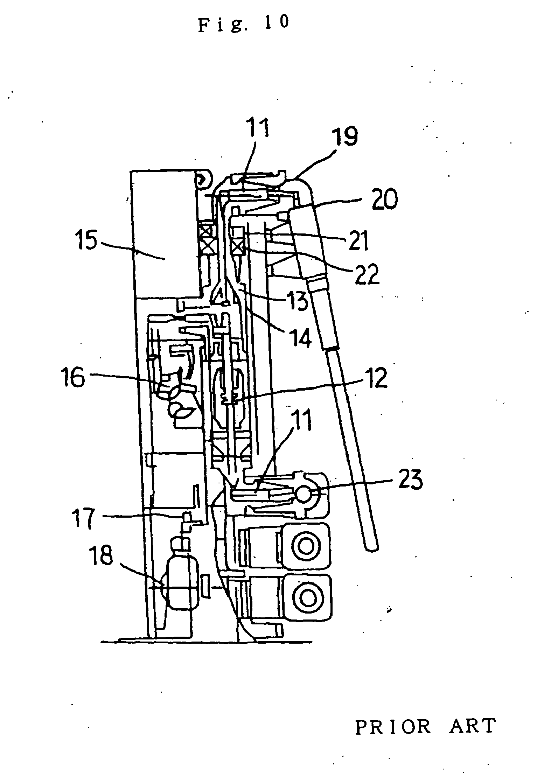

The application to a switch gear insulator surface is described in Technical Report of the Society of Electricity (2 part), No. 259, p. 37. As shown in Fig. 10 of the accompanying drawings, a ground layer is disposed on a surface of an insulator 13 of a solid insulated switch that molds a conductor 11 and a vacuum valve 12.

In the drawing, reference numeral 14 denotes an electric conductive coating, reference numeral denotes a control unit, reference numeral 16 denotes an operation mechanism, reference numeral 17 denotes an insertion device, reference numeral 18 denotes a secondary switch plug, reference numeral 19 denotes a line breaker portion, reference numeral 20 denotes a cable head, reference numeral 21 denotes a zero-phase current transformer, reference numeral 22 denotes current transformer and reference numeral 23 denotes an insulated bus.

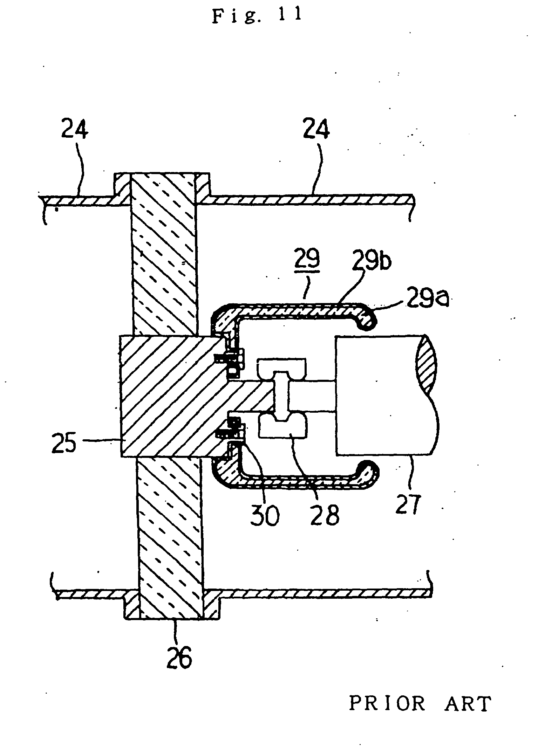

Japanese Patent Laid-Open Publication No. 61-109411 describes a method of forming a conductor layer on an insulator surface and a method of vacuum depositing or thermally spraying Zn or Pb on a surface of a shield of an insulator inside a gas container, as shown in Fig. 11.

Referring to Fig. 11, a conductor 25 is disposed inside a ground tank, that is, a container 24, storing an SF₆ gas as an insulating gas sealed therein. This conductor 25 is molded integrally with insulating spacers 26 and is supported by the insulating spacers 26 inside the tank. Reference numeral 27 denotes a conductor, too. The conductor 27 is electrically connected by a contact 28 with the conductor 25.

A shield 29 for mitigating electrolysis, encompasses the junction between both conductors 25 and 27 and is fixed to the conductor 25 by bolts 30. The bolts 30 fix mechanically the shield 29 to the conductor 25 and apply at the same time a pressure to the fixation surface between the shield 29 and the conductor 25 so that the shield 29 and the conductor 25 can be brought into close contact and can be electrically connected to each other.

The shield 29 for mitigating electrolysis is a plastic component. When a main body 29a of the plastic component 29 is covered with conduction means, that is, a conductor layer 29b, the plastic component 29 becomes electrically conductive.

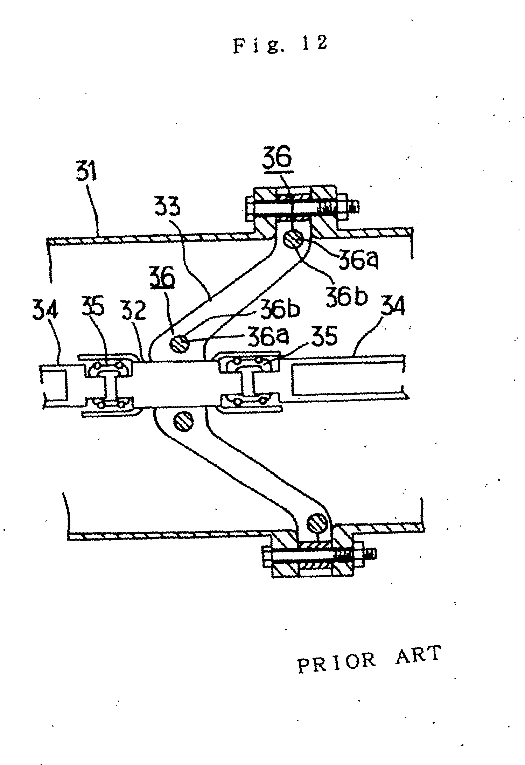

Furthermore, Japanese Patent Laid-Open Publication No. 2-303311 discloses application of a conductive paint, Zn thermal spraying, sputtering or metal plating to a surface of an electric field control ring made of an insulating material, as shown in Fig. 12.

In Fig. 12, reference numeral 31 denotes a gas container, reference numeral 32 denotes a conductor, reference numeral 33 denotes an insulating spacer, reference numeral 34 denotes a conductor, reference numeral 35 denotes a contact and reference numeral 36 denotes a field control ring. The field control ring 36 comprises a control ring main body 36a and a conductor film 36b.

In the vacuum insulated switch gear according to the prior art having the construction described above, the conductive paint must be again coated in some cases from the aspect of durability. Since coating uses a solvent, a long time is necessary for drying the paint and the production cost increases. From the aspect of environmental pollution, too, the use of solvents must be avoided as much as possible.

Vacuum deposition and sputtering involve the film formation inside a vacuum tank and are not suitable for mass-production and for production of large articles. In addition, because a film formation rate is low, a long time is necessary for processing and the production cost rises.

Metal plating is of a wet system and needs a great deal of troubles in masking and drying in post-steps. In addition, this method cannot process large articles due to the sizes of a plating bath and a conveyor.

Thermal spraying is a method of forming a coating by thermally spraying a molten metal in an open atmosphere to the surface of an insulator. Though relatively simple and economical, this method is not free from the problem that the use of Pb as a toxic material is preferably avoided from the aspect of environmental pollution.

Thermal spraying of Zn is not only inferior in heat resistance but forms whiskers. Therefore, this method cannot be used for a portion on which an electric field concentrates.

The electric field is likely to concentrate on an end face of the coating formed by thermal spraying because it is thin. When adhesion is low between a spraying agent and the insulator, the sprayed material dissociates from the surface of the insulator, or adheres to the insulator surface, thereby inviting the drop of dielectric strength.

To solve the problems with the prior art technologies described above, the present invention aims at providing a vacuum insulated switch gear having an electric conductive coating that can be economically produced and yet has high reliability.

It is another object of the present invention to propose a method of producing a vacuum insulated switch gear having an electric conductive coating that can be economically produced and yet has high reliability.

### SUMMARY OF THE INVENTION

A vacuum insulated switch gear according to the present invention comprising a vacuum container for accommodating a switch portion, a molded insulator for surrounding the vacuum container and an electric conductive coating for covering the surface of the molded insulator, wherein the electric conductive coating is formed on an outer surface of the molded insulator by thermally spraying a melted material of at least one metal selected from the group consisting of Al, Cu, Ag, Ni, Cr, Fe, Ti and Zr in open air.

A vacuum insulated switch gear according to the present invention comprising a vacuum container for accommodating a switch portion, a molded insulator for surrounding the vacuum container and an electric conductive coating for covering the surface of the molded insulator, wherein the electric conductive coating is formed on an outer surface of the molded insulator by thermally spraying a melted material of an oxide of at least one metal selected from the group consisting of Al, Cu, Ag, Ni, Cr, Fe, Ti and Zr in open air.

A vacuum insulated switch gear according to the present invention comprising a vacuum container for accommodating a switch portion, a molded insulator for surrounding the vacuum container and an electric conductive coating for covering a surface of said molded insulator, wherein the electric conductive coating is formed on an outer surface of the molded insulator by thermally spraying a melted material of a mixture of at least one metal selected from the group consisting of Al, Cu, Ag, Ni, Cr, Fe, Ti and Zr and an oxide of at least one metal selected from this group, in open air.

The electric conductive coating formed by thermally spraying at least one metal selected from the group consisting of Al, Cu, Ag, Ni, Cr, Fe, Ti and Zr or an oxide of at least one metal selected from this group, or a mixture of this at least one metal and the oxide, to an outer surface of a molded insulator can be formed economically and moreover, with high reliability.

In the vacuum insulated switch gear according to the present invention, the molded insulator includes a cylindrical portion that surrounds a vacuum container, end portions at both ends of the cylindrical portion, wherein a taper surface the diameter of which progressively increases towards the end of said the end portion is formed on a peripheral surface of at least one of the end portions of the cylindrical portion, and the end of the electric conductive coating is positioned on this taper surface.

In the vacuum insulated switch gear according to the present invention, the molded insulator includes a cylindrical portion that surrouds a vacuum container, and end portions of the cylindrical portions, wherein an annular groove portion is formed on a peripheral surface of close to at least one of the end portions of the cylindrical portion, and the end of the electric conductive coating is positioned to this groove portion.

In the vacuum insulated switch gear according to the present invention, the molded insulator includes a cylindrical portion that surrounds a vacuum container, and end portions of the cylindrical portion, wherein a slope surface is formed on the outer surface of at least one of the end portions of the cylindrical portion.

In the vacuum insulated switch gear according to the present invention, the molded insulator includes a cylindrical portion that surrounds a vacuum container, and end portions of the cylindrical portion, wherein a step surface is formed on the outer surface of at least one of the end portions of the cylindrical portion.

In the vacuum insulated switch gear according to the present invention, the molded insulator includes a cylindrical portion that surrounds a vacuum container and end portions of the cylindrical portion, wherein a taper surface is formed on the outer surface of at least one of the end portions of the cylindrical portion.

When the taper surface, the annular groove portion, the slope surface or the step surface is formed as described above, dielectric breakdown resulting from the concentration of the electric field on the end portion of the electric conductive coating can be effectively avoided.

The vacuum insulated switch gear according to the present invention further includes a sealant applied to an outer surface of the electric conductive coating described above, and this sealant prevents fall-off of a coating material from the surface of the electric conductive coating.

A production method of a vacuum insulated switch gear according to the present invention comprising the steps of forming a molded insulator in such a manner as to surround a vacuum container accommodating therein a switch portion, and forming an electric conductive coating in such a manner as to cover a surface of the molded insulator, wherein the electric conductive coating is formed by thermally spraying at least one metal selected from the group consisting of Al, Cu, Ag, Ni, Cr, Fe, Ti and Zr to the surface of the molded insulator in open air.

Another production method of a vacuum insulated switch gear according to the present invention comprising the steps of forming a molded insulator in such a manner as to surround a vacuum container accommodating therein a switch portion, and forming an electric conductive coating in such a manner as to cover a surface of the molded insulator, wherein the electric conductive coating is formed by thermally spraying an oxide of at least one metal selected from the group consisting of Al, Cu, Ag, Ni, Cr, Fe, Ti and Zr to a surface of the molded insulator in open air.

Another production method of a vacuum insulated switch gear according to the present invention comprising the steps of forming a molded insulator in such a manner as to surround a vacuum container accommodating therein a switch portion, and forming an electric conductive coating in such a manner as to cover a surface of the molded insulator, wherein the electric conductive coating is formed by thermally spraying a mixture of at least one metal selected from the group consisting of Al, Cu, Ag, Ni, Cr, Fe, Ti and Zr and an oxide of at least one metal selected from this group to a surface of the molded insulator in open air.

The production method described above that thermally sprays at least one metal selected from the group consisting of Al, Cu, Ag, Ni, Cr, Fe, Ti and Zr, or an oxide of at least one metal selected from this group, or a mixture of at least one metal selected from this group and an oxide of at least one metal selected from the group, to a surface of the molded insulator in open air can form economically an electric conductive coating having high reliability, and can economically produce a vacuum insulated switch gear having high reliability.

Still another production method of a vacuum insulated switch gear according to the present invention applies air blow to an electric conductive coating after the electric conductive coating is formed by thermally spraying at least one metal described above to the surface of the molded insulator.

Still another production method of a vacuum insulated switch gear according to the present invention applies shot blast to an electric conductive coating after the electric conductive coating is formed by thermally spraying at least one metal described above to the surface of the molded insulator.

Still another production method of a vacuum insulated switch gear according to the present invention applies brushing to an electric conductive coating after the electric conductive coating is formed by thermally spraying at least one metal described above to the surface of the molded insulator.

When air blow, shot blast or brushing is applied to the electric conductive coating as described above, the coating material having low adhesive strength can be compulsively dropped from the surface of the electric conductive coating, and insulation performance can be improved.

These and other objects and novel features of the present invention will become more apparent from the following detailed description when taken in conjunction with the accompanying drawings.

### BRIEF DESCRIPTION OF THE DRAWINGS

Fig. 1 is a front view showing a vacuum insulated switch gear according to an embodiment 1 of the present invention;
Fig. 2 is a sectional side view showing the vacuum insulated switch gear according to the embodiment 1 of the present invention;
Fig. 3 is a front view showing the vacuum insulated switch gear according to the embodiment 1 of the present invention;
Fig. 4 is a sectional side view showing the vacuum insulated switch gear according to the embodiment 1 of the present invention;
Figs. 5(a), (b) and (c) are sectional views each showing an insulator portion according to an embodiment 2 of the present invention;
Figs. 6(a) and (b) are sectional views each showing the insulator portion according to the embodiment 2 of the present invention;
Figs. 7(a), (b) and (c) are sectional views each showing the insulator portion according to the embodiment 2 of the present invention;
Figs. 8(a), (b) and (c) are sectional views each showing the insulator portion according to the embodiment 2 of the present invention.
Figs. 9(a), (b) and (c) are sectional views each showing the insulator portion according to the embodiment 2 of the present invention;
Fig. 10 is a side view showing a switch gear according to the prior art;
Fig. 11 is a sectional view showing a gas insulated electric apparatus according to the prior art; and
Fig. 12 is a sectional view showing a gas insulated switch gear according to the prior art.

### DESCRIPTION OF THE PREFERRED EMBODIMENTS

### Embodiment 1:

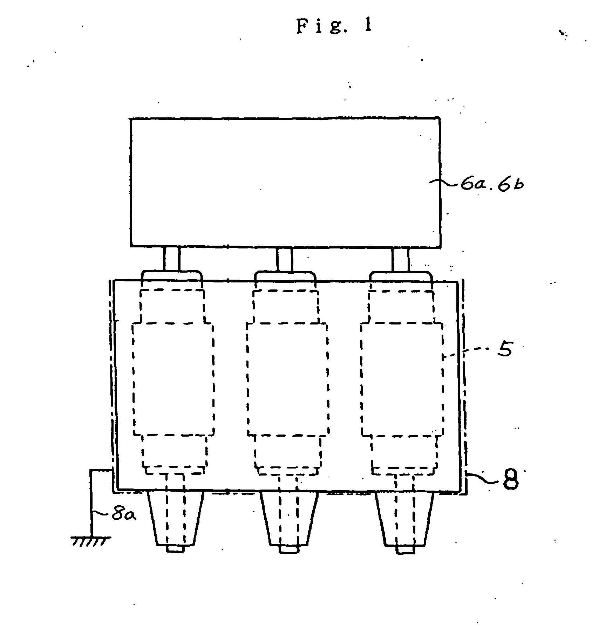

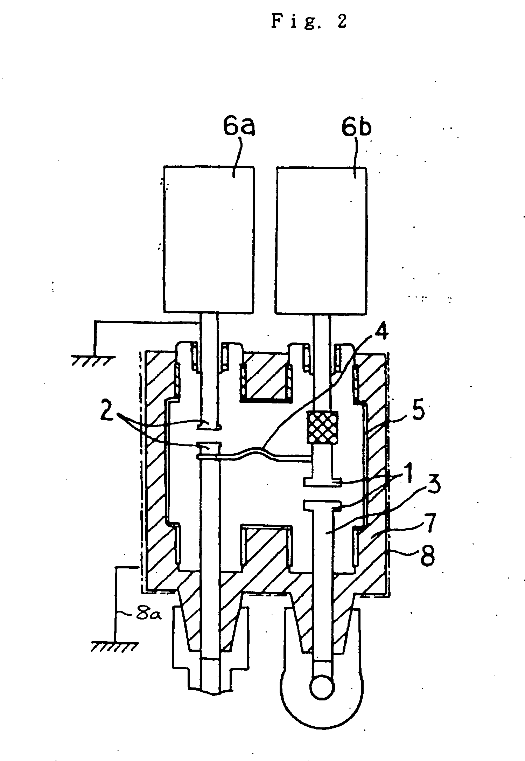

Hereinafter, an embodiment 1 according to the present invention will be explained with reference to the drawings. Fig. 1 is a front view showing a vacuum insulated switch gear according to an embodiment 1 of the present invention and Fig. 2 is its sectional side view. In the drawings, reference numeral 1 denotes main circuit contact for breaking a circuit current. Reference numeral 2 denotes a ground contact for grounding a load circuit. Reference numerals 3 and 4 denote a conductor and a flexible conductor, respectively. Reference numeral 5 denotes a vacuum container for accommodating these circuit components. The vacuum container 5 is disposed for each of a three-phase electric circuit or in other words, three vacuum containers 5 in all are disposed in the three-phase electric circuit. Each vacuum container 5 accommodates the main circuit contact 1, the ground contact 2, the conductor 3 and the flexible conductor 4. Reference numerals 6a and 6b denote operation mechanisms for opening and closing the main circuit contact 1 and the ground contact 2, respectively. A common molded insulator 7 surround these three vacuum containers 5 constituting the three-phase electric circuit. The molded insulator 7 is injection-molded by charging an insulating resin such as an epoxy resin into a predetermined mold in such a manner as to collectively surround the three vacuum containers 5 that are aligned. An electric conductive coating 8 is formed on an outer surface of the molded insulator 7. The electric conductive coating 8 is grounded through a ground lead 8a to stabilize electric performance of the vacuum insulated switch gear.

The electric conductive coating 8 is formed by thermally spraying a melted material of at least one metal selected from the group consisting of Al, Cu, Ag, Ni, Cr, Fe, Ti and Zr or a mixture of two or more of these metals to the outer surface of the molded insulator 7 in open air.

An electric conductive coating 8 having electric conductivity can also be formed by thermally spraying a molten material of an oxide of at least one metal selected from the group described above, or a molten material of a mixture of at least one metal selected from the group described above and an oxide of at least one metal described above to the outer surface of the molded insulator 7 in open air.

The electric conductive coating 8 formed by thermally spraying these metals or the metal oxide(s) in open air to the outer surface of the molded insulator 7 has higher durability than the conventional electric conductive coating. This electric conductive coating 8 does not need the use of a solvent for its formation unlike the conventional electric conductive coating and does not either need a long drying time. Therefore, it can lower the production cost. In addition, the metals of the group consisting of Al, Cu, Ag, Ni, Cr, Fe, Ti and Zr or their oxides do not form whiskers and do not either pollute the environment.

The molten matter of the metals or the metal oxides or their mixture described above is thermally sprayed to the outer surface of the molded insulator 7 in open air to form the electric conductive coating 8. Therefore, the formation rate of the coating is higher than vacuum deposition and sputtering, or the electric conductive coating 8 can be formed within a shorter time, and the production cost can be lowered. In comparison with plating, the coating can be formed by a dry system, and troubles involved in the formation of the coating can be reduced.

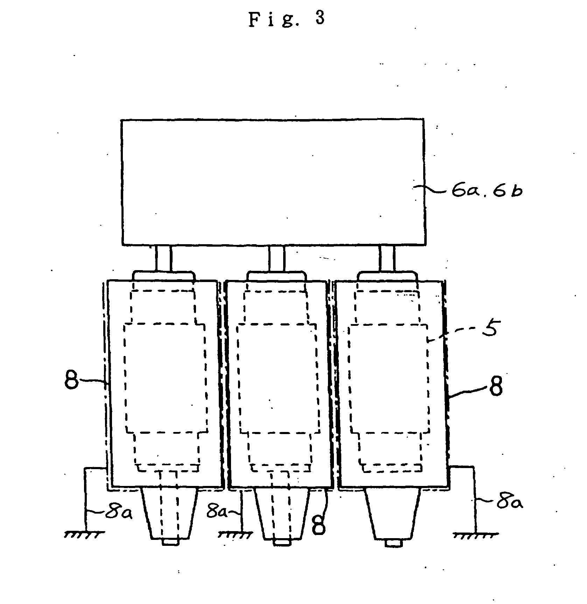

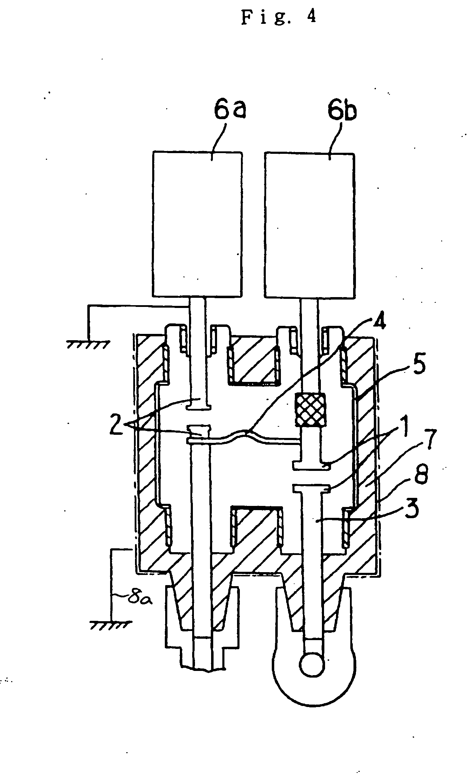

Fig. 3 is a front view showing a vacuum insulated switch gear according to another embodiment, and Fig. 4 is its sectional side view. Reference numeral 1 denotes a main circuit contact for breaking a circuit current. Reference numeral 2 denotes a ground contact for grounding a load circuit. Reference numeral 3 denotes a conductor. Reference numeral 4 denotes a flexible conductor. Reference numeral 5 denotes a vacuum container that accommodates these circuit components. Thee vacuum containers 5 are disposed in alignment for a three-phase electric circuit. In this embodiment, these three vacuum containers 5 are individually surrounded with a molded insulator 7 of an epoxy resin, or the like. The electric conductive coating 8 described above is formed on the outer surface of each mold insulator 7 and is grounded. The electric conductive film 8 is formed by thermally spraying a molten material of at least one metal selected from the group consisting of Al, Cu, Ag, Ni, Cr, Fe, Ti and Zr or a molten material of an oxide of at least one metal selected from this group, or a molten matter of a mixture of at least one metal and an oxide of at least one metal selected from the group described above, to an outer surface of the molded insulator 7 in open air in the same way as in the embodiment shown in Figs. 1 and 2. An economical vacuum insulated switch gear having high reliability can be obtained in the same way.

As described above, the present invention uses Al, Cu, Ag, Ni, Cr, Fe, Ti and Zr and their oxides and mixtures, that have higher melting points than the melting point of Zn, do not form whiskers, and are relatively economical and readily available, as the spray materials that are economical and have high heat resistance and high withstand voltage. The spray material may be those which consist of the materials described above as the principal component and contain other components to a certain extent. Such a material, too, exhibits similar effects.

The vacuum container 5 may have any construction so long as it can accommodate the breaking portion, the disconnection portion and the ground switch portion. It is possible to employ the construction, for example, in which a space between adjacent arc grooves of a movable contact is connected to a movable rod, as described in Japanese Patent Laid-Open Publication No. 11-258185, or the construction in which a feeding structure to a movable electrode between a pair of opposed contacts is improved, as described in Japanese Patent Laid-Open Publication No. 11-41726.

As described above, the present invention thermally sprays a metal such as Al, Cu, Ag, Ni, Cr, Fe, Ti or Zr, or its oxide or mixture to the surface of the molded insulator 7 of the vacuum insulated switch gear and forms the electric conductive coating. Therefore, the present invention can obtain the economical vacuum insulated switch gear having high reliability. Since the production method of the present invention can economically form the electric conductive coating with high reliability, the present invention is effective for improving reliability of the vacuum insulated switch gear and for reducing its cost of production. Embodiment 2:

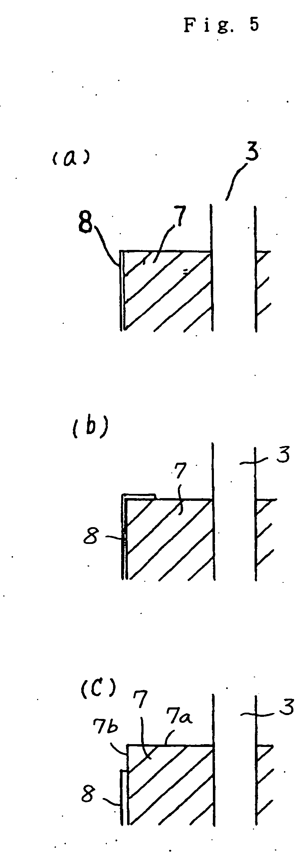

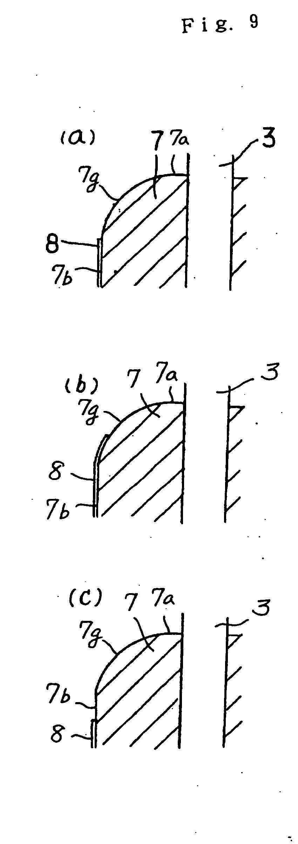

Figs. 5 to 9 are sectional views each showing the surface shapes of the end portion of the sprayed coating 8 and the insulator 7. The drawings show the cases where the surface shape of the insulator 7 consists of a plurality of flat surfaces or curved surfaces. The structures shown in Figs. 5(a) and (b) correspond to the structures shown in Figs. 1 to 4, but the end portion of the sprayed coating 8 has a relatively high electric field.

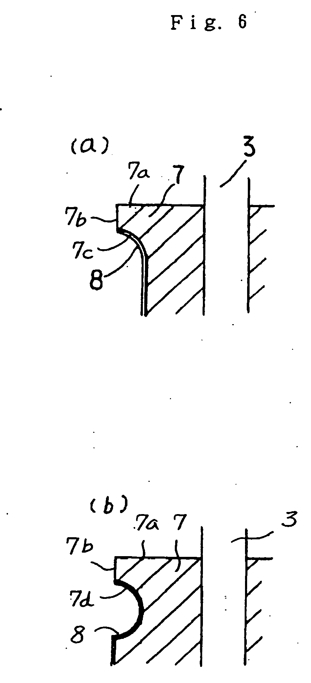

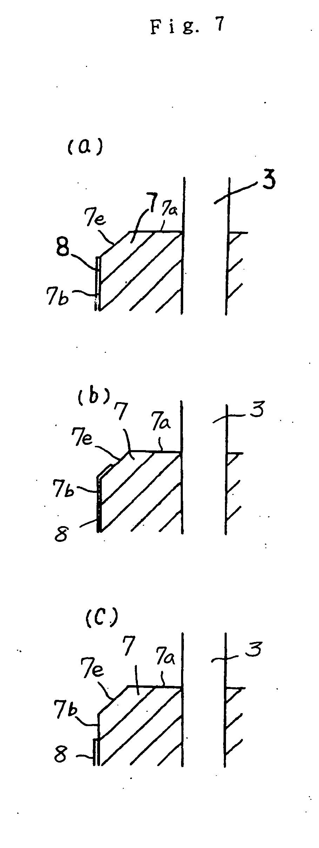

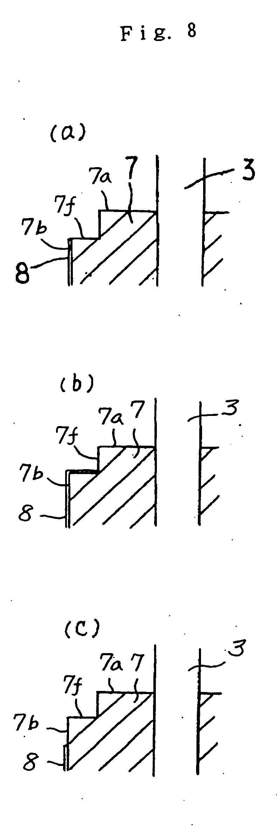

Fig. 5(c) shows the structure in which the sprayed coating 8 is positioned closer to the cylindrical portion 7b of the insulator 7 than its end face 7a. Figs. 6(a) and (b) show the structure in which a taper surface 7c which has an arc-shaped section and the diameter of which increases progressively towards the end face 7a is formed on an outer peripheral surface of the cylindrical portion 7b near at least one of the end faces 7a of the insulator 7 and the end portion of the electric conductive film 8 is positioned on this taper surface 7a. Alternatively, an annular groove portion 7d having a semi-circular section is formed round the outer peripheral surface of the cylindrical portion 7b near at least one of the end faces 7a of the insulator 7 and the end portion of the electric conductive coating 8 is positioned to this groove portion 7d so as to prevent the occurrence of dielectric breakdown due to the concentration of the electric field. Furthermore, it is effective to form a slope surface 7e between at least one of the end faces 7a of the insulator 7 and the cylindrical portion 7b encompassing the vacuum container as shown in Figs. 7(a) to (c), or a section 7f between at least one of the end portions 7a of the insulator 7 and the cylindrical portion 7b encompassing the vacuum container, as shown in Figs. 8(a) to (c). It is also effective to form a taper surface 7g that has a curved section and the diameter of which decreases progressively towards the end face 7a between at least one of the end faces 7a of the insulator 7 and the cylindrical portion 7b. When these structures shown in Fig. 5(c), Figs. 6(a) and (b), Figs. 7(a) to (c), Figs. 8(a) to (c) and Figs. 9(a) to (c) are combined, the electric field can be reduced and reliability of insulation performance can be improved.

### Embodiment 3:

Air blow can be conducted by spraying compressed air or a nitrogen gas of 2 to 7 atms. by using an air gun to the surface of the electric conductive coating 8 after spraying. In this way, the sprayed material having low adhesive strength on the outermost periphery of the electric conductive coating 8 can be compulsively dissociated, and reliability of insulating performance can be improved.

### Embodiment 4:

Spraying (shot blast) of steel powder, ceramic powder, glass powder, plastic powder, dry ice, chaff, etc. may be sprayed by compressed air. In consequence, the sprayed material having low adhesive strength on the outermost periphery of the electric conductive coating 8 can be compulsively dissociated or brought into close adhesion, and reliability of insulation performance can be improved.

### Embodiment 5:

Brushing can be also made on the surface of the electric conductive coating 8 after its formation by spraying, by using a brush made of metals or fibers of nylon, or the like. In consequence, the sprayed material having low adhesive strength on the outermost periphery of the electric conductive coating 8 can be compulsively dissociated and reliability of insulating performance can be improved.

### Embodiment 6:

A silicone type or fluorine type sealant may be applied to the surface of the electric conductive coating 8 after its formation by spraying. In consequence, dissociation of the sprayed material having low adhesive strength on the outermost periphery of the electric conductive coating 8 can be prevented and reliability of insulation performance can be improved.

Although several preferred embodiments of the present invention have thus been described with reference to the accompanying drawings, the present invention is not particularly limited to these embodiments but can be changed or modified in various ways without departing from the scope of the invention as defined by the appended claims.

## Claims

1. A vacuum insulated switch gear comprising a vacuum container (5) for accommodating a switch portion, a molded insulator (7) for surrounding said vacuum container (5), and an electric conductive coating (8) for covering, a surface of said molded insulator (7), wherein said electric conductive coating (8) is formed on an outer surface of said molded insulator (7) by thermally spraying a melted material of at least one metal selected from the group consisting of Al, Cu, Ag, Ni, Cr, Fe, Ti and Zr in open air.

2. A vacuum insulated switch gear comprising a vacuum container (5) for accommodating a switch portion, a molded insulator (7) for surrounding said vacuum container (5), and an electric conductive coating (8) for covering, a surface of said molded insulator (7), wherein said electric conductive coating (8) is formed on an outer surface of said molded insulator (7) by thermally spraying a melted material of an oxide of at least one metal selected from the group consisting of Al, Cu, Ag, Ni, Cr, Fe, Ti and Zr in open air.

3. A vacuum insulated switch gear comprising a vacuum container (5) for accommodating a switch portion, a molded insulator (7) for surrounding said vacuum container (5), and an electric conductive coating (8) for covering, a surface of said molded insulator (7), wherein said electric conductive coating (8) is formed on an outer surface of said molded insulator (7) by thermally spraying a melted material of a mixture of at least one metal selected from the group consisting of Al, Cu, Ag, Ni, Cr, Fe, Ti and Zr and an oxide of at least one metal selected from said group in open air.

4. A method of producing a vacuum insulated switch gear comprising the steps of forming a molded insulator (7) in such a manner as to surround a vacuum container (5) accommodating a switch portion, and forming an electric conductive coating (8) in such a manner as to cover a surface of said molded insulator (7), wherein said electric conductive coating (8) is formed on an outer surface of said molded insulator (7) by thermally spraying a melted material of at least one metal selected from the group consisting of Al, Cu, Ag, Ni, Cr, Fe, Ti and Zr in open air.

5. A method of producing a vacuum insulated switch gear comprising the steps of forming a molded insulator (7) in such a manner as to surround a vacuum container (5) accommodating a switch portion, and forming an electric conductive coating (8) in such a manner as to cover a surface of said molded insulator (7), wherein said electric conductive coating (8) is formed on an outer surface of said molded insulator (7) by thermally spraying a melted material of an oxide of at least one metal selected from the group consisting of Al, Cu, Ag, Ni, Cr, Fe, Ti and Zr in open air.

6. A method of producing a vacuum insulated switch gear comprising the steps of forming a molded insulator (7) in such a manner as to surround a vacuum container (5) accommodating a switch portion, and forming an electric conductive coating (8) in such a manner as to cover a surface of said molded insulator (7), wherein said electric conductive coating (8) is formed on an outer surface of said molded insulator (7) by thermally spraying a melted material of a mixture of at least one metal selected from the group consisting of Al, Cu, Ag, Ni, Cr, Fe, Ti and Zr and an oxide of at least one metal selected from said group in open air.

7. A method of producing a switch gear according to claim 4, 5 or 6, wherein a melted material of said at least one metal is thermally sprayed to a surface of said molded insulator (7) to form said electric conductive coating (8), and air blow is then applied to said electric conductive coating (8).

8. A method of producing a switch gear according to claim 4, 5 or 6 , wherein a melted material of said at least one metal is thermally sprayed to a surface of said molded insulator (7), and shot blast is then applied to said electric conductive coating (8).

9. A method of producing a vacuum insulated switch gear according to claim 4 , 5 or 6 , wherein a melted material of said at least one metal is thermally sprayed to a surface of said molded insulator (7) to form said electric conductive coating (8), and brushing is then applied to said electric conductive coating (8).

## Patentansprüche

1. Vakuumisolierte Schaltvorrichtung, umfassend einen Vakuumbehälter (5) zum Aufnehmen eines Schaltabschnitts, einen ausgeformten Isolator (7) zum Umgeben des Vakuumbehälters (5), und eine elektrisch leitende Beschichtung (8) zum Bedecken einer Fläche des ausgeformten Isolators (7), wobei die elektrisch leitende Beschichtung (8) an einer Außenfläche des ausgeformten Isolators (7) ausgebildet wird, indem ein geschmolzenes Material aus zumindest einem Metal, das aus der Al, Cu, Ag, Ni, Cr, Fe, Ti und Zr aufweisenden Gruppe ausgewählt ist, thermisch in die freie Luft gesprüht wird.

2. Vakuumisolierte Schaltvorrichtung, umfassend einen Vakuumbehälter (5) zum Aufnehmen eines Schaltabschnitts, einen ausgeformten Isolator (7) zum Umgeben des Vakuumbehälters (5), und eine elektrisch leitende Beschichtung (8) zum Bedecken einer Fläche des ausgeformten Isolators (7), wobei die elektrisch leitende Beschichtung (8) an einer Außenfläche des ausgeformten Isolators (7) ausgebildet wird, indem ein geschmolzenes Material eines Oxids aus zumindest einem Metal, das aus der Al, Cu, Ag, Ni, Cr, Fe, Ti und Zr aufweisenden Gruppe ausgewählt ist, thermisch in die freie Luft gesprüht wird.

3. Vakuumisolierte Schaltvorrichtung, umfassend einen Vakuumbehälter (5) zum Aufnehmen eines Schaltabschnitts, einen ausgeformten Isolator (7) zum Umgeben des Vakuumbehälters (5), und eine elektrisch leitende Beschichtung (8) zum Bedecken einer Fläche des ausgeformten Isolators (7), wobei die elektrisch leitende Beschichtung (8) an einer Außenfläche des ausgeformten Isolators (7) ausgebildet wird, indem ein geschmolzenes Material einer Mischung aus zumindest einem Metal, das aus der Al, Cu, Ag, Ni, Cr, Fe, Ti und Zr aufweisenden Gruppe ausgewählt ist, thermisch in die freie Luft gesprüht wird.

4. Verfahren zum Herstellen einer vakuumisolierten Schaltvorrichtung, umfassend die Schritte: Ausbilden eines ausgeformten Isolators (7), so dass dieser einen einen Schaltabschnitt aufnehmenden Vakuumbehälter (5) umgibt, und Ausbilden einer elektrisch leitenden Beschichtung (8), so dass diese eine Fläche des ausgeformten Isolators (7) umgibt, wobei die elektrisch leitende Beschichtung (8) an einer Außenfläche des ausgeformten Isolators (7) ausgebildet wird, indem ein geschmolzenes Material aus zumindest einem Metal, das aus der Al, Cu, Ag, Ni, Cr, Fe, Ti und Zr aufweisenden Gruppe ausgewählt ist, thermisch in die freie Luft gesprüht wird.

5. Verfahren zum Herstellen einer vakuumisolierten Schaltvorrichtung, umfassend die Schritte: Ausbilden eines ausgeformten Isolators (7), so dass dieser einen einen Schaltabschnitt aufnehmenden Vakuumbehälter (5) umgibt, und Ausbilden einer elektrisch leitenden Beschichtung (8), so dass diese eine Fläche des ausgeformten Isolators (7) umgibt, wobei die elektrisch leitende Beschichtung (8) an einer Außenfläche des ausgeformten Isolators (7) ausgebildet wird, indem ein geschmolzenes Material aus einem Oxid aus zumindest einem Metal, das aus der Al, Cu, Ag, Ni, Cr, Fe, Ti und Zr aufweisenden Gruppe ausgewählt ist, thermisch in die freie Luft gesprüht wird.

6. Verfahren zum Herstellen einer vakuumisolierten Schaltvorrichtung, umfassend die Schritte: Ausbilden eines ausgeformten Isolators (7), so dass dieser einen einen Schaltabschnitt aufnehmenden Vakuumbehälter (5) umgibt, und Ausbilden einer elektrisch leitenden Beschichtung (8), so dass diese eine Fläche des ausgeformten Isolators (7) umgibt, wobei die elektrisch leitende Beschichtung (8) an einer Außenfläche des ausgeformten Isolators (7) ausgebildet wird, indem ein geschmolzenes Material aus einer Mischung aus zumindest einem Metal, das aus der Al, Cu, Ag, Ni, Cr, Fe, Ti und Zr aufweisenden Gruppe ausgewählt ist, thermisch in die freie Luft gesprüht wird.

7. Verfahren zum Herstellen einer Schaltvorrichtung gemäß Anspruch 4, 5 oder 6, bei dem ein geschmolzenes Material des zumindest einen Metalls thermisch an eine Fläche des ausgeformten Isolators (7) gesprüht wird, um eine elektrisch leitende Beschichtung (8) auszubilden, und dann ein Luftstrahl an der elektrisch leitenden Beschichtung (8) aufgebracht wird.

8. Verfahren zum Herstellen einer Schaltvorrichtung gemäß Anspruch 4, 5 oder 6, bei dem ein geschmolzenes Material des zumindest einen Metalls thermisch an eine Fläche des ausgeformten Isolators (7) gesprüht wird, um eine elektrisch leitende Beschichtung (8) auszubilden, und dann ein Partikelstrahl an der elektrisch leitenden Beschichtung (8) aufgebracht wird.

9. Verfahren zum Herstellen einer Schaltvorrichtung gemäß Anspruch 4, 5 oder 6, bei dem ein geschmolzenes Material des zumindest einen Metalls thermisch an eine Fläche des ausgeformten Isolators (7) gesprüht wird, um eine elektrisch leitende Beschichtung (8) auszubilden, und die elektrisch leitende Beschichtung (8) dann gebürstet wird.

## Revendications

1. Appareillage de commutation isolé sous vide comprenant un contenant sous vide (5) destiné à recevoir une partie de commutateur, un isolateur moulé (7) destiné à entourer ledit contenant sous vide (5), et un revêtement conducteur électrique (8) destiné à couvrir une surface dudit isolateur moulé (7), dans lequel ledit revêtement conducteur électrique (8) est formé sur une surface extérieure dudit isolateur moulé (7) en pulvérisant de manière thermique un matériau fondu d'au moins un métal sélectionné dans le groupe constitué par Al, Cu, Ag, Ni, Cr, Fe, Ti et Zr à l'air libre.

2. Appareillage de commutation isolé sous vide comprenant un contenant sous vide (5) destiné à recevoir une partie de commutateur, un isolateur moulé (7) destiné à entourer ledit contenant sous vide (5), et un revêtement conducteur électrique (8) destiné à couvrir une surface dudit isolateur moulé (7), dans lequel ledit revêtement conducteur électrique (8) est formé sur une surface extérieure dudit isolateur moulé (7) en pulvérisant de manière thermique un matériau fondu d'un oxyde d'au moins un métal sélectionné dans le groupe constitué par Al, Cu, Ag, Ni, Cr, Fe, Ti et Zr à l'air libre.

3. Appareillage de commutation isolé sous vide comprenant un contenant sous vide (5) destiné à recevoir une partie de commutateur, un isolateur moulé (7) destiné à entourer ledit contenant sous vide (5), et un revêtement conducteur électrique (8) destiné à couvrir une surface dudit isolateur moulé (7), dans lequel ledit revêtement conducteur électrique (8) est formé sur une surface extérieure dudit isolateur moulé (7) en pulvérisant de manière thermique un matériau fondu d'un mélange d'au moins un métal sélectionné dans le groupe constitué par Al, Cu, Ag, Ni, Cr, Fe, Ti et Zr et d'un oxyde d'au moins un métal sélectionné dans ledit groupe à l'air libre.

4. Procédé de fabrication d'un appareillage de commutation isolé sous vide comprenant les étapes consistant à former un isolateur moulé (7) de manière à entourer un contenant sous vide (5) qui reçoit une partie de commutateur, et à former un revêtement conducteur électrique (8) de manière à couvrir une surface dudit isolateur moulé (7), dans lequel ledit revêtement conducteur électrique (8) est formé sur une surface extérieure dudit isolateur moulé (7) en pulvérisant de manière thermique un matériau fondu d'au moins un métal sélectionné dans le groupe constitué par Al, Cu, Ag, Ni, Cr, Fe, Ti et Zr à l'air libre.

5. Procédé de fabrication d'un appareillage de commutation isolé sous vide comprenant les étapes consistant à former un isolateur moulé (7) de manière à entourer un contenant sous vide (5) qui reçoit une partie de commutateur, et à former un revêtement conducteur électrique (8) de manière à couvrir une surface dudit isolateur moulé (7), dans lequel ledit revêtement conducteur électrique (8) est formé sur une surface extérieure dudit isolateur moulé (7) en pulvérisant de manière thermique un matériau fondu d'un oxyde d'au moins un métal sélectionné dans le groupe constitué par Al, Cu, Ag, Ni, Cr, Fe, Ti et Zr à l'air libre.

6. Procédé de fabrication d'un appareillage de commutation isolé sous vide comprenant les étapes consistant à former un isolateur moulé (7) de manière à entourer un contenant sous vide (5) qui reçoit une partie de commutateur, et à former un revêtement conducteur électrique (8) de manière à couvrir une surface dudit isolateur moulé (7), dans lequel ledit revêtement conducteur électrique (8) est formé sur une surface extérieure dudit isolateur moulé (7) en pulvérisant de manière thermique un matériau fondu d'un mélange d'au moins un métal sélectionné dans le groupe constitué par Al, Cu, Ag, Ni, Cr, Fe, Ti et Zr et d'un oxyde d'au moins un métal sélectionné dans ledit groupe à l'air libre.

7. Procédé de fabrication d'un appareillage de commutation selon l'une quelconque des revendications 4, 5 ou 6, dans lequel un matériau fondu dudit au moins un métal est pulvérisé de manière thermique sur une surface dudit isolateur moulé (7) de façon à former ledit revêtement conducteur électrique (8), et un jet d'air est ensuite appliqué sur ledit revêtement conducteur électrique (8).

8. Procédé de fabrication d'un appareillage de commutation selon l'une quelconque des revendications 4, 5 ou 6, dans lequel un matériau fondu dudit au moins un métal est pulvérisé de manière thermique sur une surface dudit isolateur moulé (7), et un décapage au sable d'acier est ensuite appliqué sur ledit revêtement conducteur électrique (8).

9. Procédé de fabrication d'un appareillage de commutation isolé sous vide selon l'une quelconque des revendications 4, 5 ou 6, dans lequel un matériau fondu dudit au moins un métal est pulvérisé de manière thermique sur une surface dudit isolateur moulé (7) de façon à former ledit revêtement conducteur électrique (8), et un brossage est ensuite appliqué sur ledit revêtement conducteur électrique (8).
